# EUROPEAN PATENT APPLICATION

(11) **EP 2 270 726 A1**
(43) Date of publication of application: **05.01.2011**
(21) Application number: 10250767.0
(22) Date of filing: 14.04.2010
(51) Int. Cl.: G06Q 10/00

(54) **Individual-item information management device and method**

(30) Priority: 23.06.2009 JP 2009148194
(71) Applicant: Hitachi, Ltd., Chiyoda-ku Tokyo 100-8280 (JP)
(72) Inventor: Hashimoto, Hirobumi, Tokyo 100-8220 (JP); Komaki, Daisuke, Tokyo 100-8220 (JP); Saito, Motonobu, Tokyo 100-8220 (JP); Kawada, Yohei, Tokyo 100-8220 (JP); Matsui, Yusuke, Tokyo 100-8220 (JP)
(74) Representative: Calderbank, Thomas Roger

(57) **Abstract**

In an assembled product, a decrease in reading efficiency is avoided from being deteriorated by reading the electronic tags of the parts and the assembled product, registering their configuration information (1230), and by placing read restriction on the electronic tags of the parts. For this purpose, manufacturing instruction information (1210), used for assembling parts into an assembled product, is used. When replaced, the electronic tags of the assembled product are read, read restriction is removed from the assembled product, the electronic tag is read, the electronic tag of a new part to be installed is read, read restriction is placed on the electronic tag, and the configuration information (1230) is updated. An invalid part replacement is detected by comparing the configuration information (1230).

## Description

The present invention relates to an individual-item information management device and method for controlling the reading of an electronic tag, and more particularly to an individual-item information management device and method that make use of manufacturing instruction information, prepared for use in fabricating a product from parts, and product configuration information. Individual-items include parts, products, and merchandise.

From the viewpoint of product safety and environment protection, the recent tendency is that the configuration information on each product and the life-cycle history information from production to disposal are carefully collected for sharing and utilizing among companies. To do so, one of the requirements is the ability to collect assembly information efficiently at the individual-item level of each product (at a level at which each of the products with the same merchandise ID code or the same model number may be identified individually). Attaching an electronic tag on a product or on all parts is expected to solve this problem.

However, an attempt to read an electronic tag from a product during the product receipt/shipment work or the sales work sometimes results in reading an electronic tag from a part that need not be read for the work. Because more tags than are needed are read, the problem is that the reading efficiency is decreased.

To solve this problem, JP Domestic Republication No. 2000-513841 (WO97/34222) provides a method and a device in which, when the reader detects multiple objects each having an electronic tag thereon, the following procedure is repeated. That is, the read objects are narrowed down by checking, and performing operation for, the bits of the identification code of each of the electronic tags of the multiple read objects and, when the read objects are finally narrowed to one, the actual read operation is performed for the electronic tag on the object and, after that, the electronic tag is put in the sleep state.

However, the device and the method described in the related art have the following problem. Assuming that a product on which an electronic tag is attached is configured by one or more parts each having an electronic tag. When the product is shipped, it is required to read only the electronic tag attached to the product but not the electronic tags attached to the parts. Nonetheless, the device and the method read all electronic tags, requiring long time for reading them.

In view of the foregoing, it is a preferred aim of the present invention to provide a method and a device that improves read efficiency by making readable only the electronic tags that are required to read.

For this purpose, the present invention detects the status of an individual-item to which an electronic tag is attached and, according to the detected status, changes the read characteristic of the electronic tag to give priority to the reading of a desired electronic tag or performs the reading of the desired electronic tag only. In one aspect of the present invention, the assembly or distribution status of an individual-item is detected, a check is made if the status indicates a predetermined status change based on the result of this detection and, if appropriate, the control processing is performed in such a way that the read characteristic of the electronic tag attached to the individual-item (or used for the management of the individual-item) is suppressed (or restricted). The present invention also includes, if necessary, the control processing in which the read characteristic of the electronic tag attached to another individual-item (or used for the management of the individual-item) increases (or only this individual-item is made readable). That is, the purpose of the present invention lies in relatively changing the read characteristic. Note that, in the present invention, the status of an individual-item includes data indicating that the individual-item is in the status before (or after) a work instruction is given.

More specifically, the following aspects are included in the present invention.

There is provided a product information management method for use in an information processing device, which comprises operation processing means, storage means, and electronic tag reading/writing means, for increasing the reading efficiency of an electronic tag. The method includes processing by the storage means for storing one of two correspondence tables, either the correspondence table that stores the correspondence between one or more parts codes and a product code, that is, the manufacturing instruction information for combining one or more parts into an assembled product or the correspondence table that stores the correspondence between individual-item IDs identifying each of the parts and the individual-item IDs identifying each of the assembled products, that is, the assembled product configuration information for representing what parts are used for configuring the assembled product and, as necessary (when a storage request is received), the correspondence table that stores the correspondence between individual-item IDs and product codes, that is, the individual-item management information for managing to which product an individual-item, which represents each part or product generically representing an assembled product, corresponds; processing by the electronic tag reading/writing means for reading, from an electronic tag attached to a product, the individual-item ID stored in that electronic tag and passing the individual-item ID to the operation processing means; processing performed in response to the individual-item ID by the operation processing means for referencing one of the manufacturing instruction information and the assembled product configuration information and, as necessary, (for example, when a reference request is received) the individual-item management information and requesting the electronic tag reading/writing means to place read restriction on, or remove read restriction from, the electronic tag that stores the individual-item ID; and processing performed in response to the request by the electronic tag reading/writing means for placing read restriction on, or removing read restriction from, the electronic tag that stores the individual-item ID. In this case, restricting tag-read (or removing such a restriction) is controlled by storing in the storage device a read restriction flag for each electronic tag and by writing or deleting the flag.

For use when one or more parts are assembled for manufacturing an assembled product, the present invention includes processing by the operation processing means for acquiring manufacturing instruction information from the storage means upon receiving the manufacturing instruction; and processing by the operation processing means for referencing the individual-item management information stored in the storage means to convert the individual-item ID, passed from the electronic tag reading/writing means, to the corresponding product code and, if the product code is a part code in the manufacturing instruction information, for requesting the electronic tag reading/writing means to place read restriction on the electronic tag that stores in the individual-item ID.

The present invention includes a second manufacturing information management method wherein, when individual-item IDs corresponding to an assembled product code and a part code in the manufacturing instruction information are passed from the electronic tag reading/writing means, the method includes processing by the operation processing means for storing the assembled product configuration information in the storage means.

For use when an old part of an assembled product is replaced by a new part, the present invention includes a first manufacturing information management method that includes processing by the electronic tag reading/writing means for reading, from an electronic tag attached to an assembled product, the individual-item ID stored in the electronic tag, and passing the individual-item ID to the operation processing means and for reading, from an electronic tag attached to a new part, the individual-item ID stored in the electronic tag, and passing the individual-item ID to the operation processing means; processing by the operation processing means for requesting the electronic tag reading/writing means to place read restriction on the electronic tag that stores the individual-item ID; processing by the electronic tag reading/writing means for placing read restriction on the electronic tag that stores the individual-item ID in response to the request; processing by the electronic tag reading/writing means for removing read restriction from the electronic tag attached to the old part, for reading the individual-item ID, stored in the electronic tag, from the electronic tag, and for passing the individual-item ID to the operation processing means; and processing by the operation processing means for deleting the configuration information which is included, as a part, in the assembled product configuration information where the individual-item ID of the old part is stored in the storage means and for registering, as the configuration information, the combination of the individual-item ID of the assembled product and the individual-item ID of the new product in the assembled product configuration information, stored in the storage means, as the assembled product and the part respectively.

For use when an old part of an assembled product is replaced by a new part, the present invention includes a first manufacturing information management method that includes processing by the electronic tag reading/writing means for reading, from an electronic tag attached to a new part, the individual-item ID stored in the electronic tag, and passing the individual-item ID to the operation processing means; processing by the operation processing means for requesting the electronic tag reading/writing means to place read restriction on the electronic tag that stores the individual-item ID; processing by the electronic tag reading/writing means for placing read restriction on the electronic tag that stores the individual-item ID in response to the request; processing by the electronic tag reading/writing means for removing read restriction from the electronic tag attached to the old part and for reading the individual-item ID, stored in the electronic tag, from the electronic tag, and passing the individual-item ID to the operation processing means; and processing by the operation processing means for updating the individual-item ID of the old part included, as a part, in the assembled product configuration information stored in the storage means to the individual-item ID of the new part.

In the above processing, the present invention includes processing by the operation processing means for referencing the individual-item management information stored in the storage means to convert the individual-item ID of the new part, passed from the electronic tag reading/writing means, to the corresponding product code and for referencing the assembled product configuration information and the individual-item management information, stored in the storage means, to acquire the individual-item ID of a part which configures the assembled product and whose product code is the same as the product code described above; and processing by the operation processing means or the electronic tag reading/writing means for removing read restriction from the electronic tag attached to the old part by specifying the individual-item ID.

For use when an assembled product is disposed of, the present invention includes processing by the electronic tag reading/writing means for reading, from an electronic tag attached to the assembled product, an individual-item ID stored in the electronic tag and passing the individual-item ID to the operation processing means, for removing read restriction from the electronic tag attached to a part, and for reading, from an electronic tag attached to the part, the individual-item ID stored in the electronic tag and passing the individual-item ID to the operation processing means; processing by the operation processing means for requesting the electronic tag reading/writing means to place read restriction on the electronic tag, which stores the individual-item ID, regardless of whether the electronic tag is on an assembled product or a part; processing by the electronic tag reading/writing means for placing read restriction on the electronic tag, which stores the individual-item ID, in response to the request; and processing by the operation processing means for deleting the configuration information, corresponding to the individual-item ID, from the assembled product configuration information stored in the storage means.

In the above processing, the present invention includes processing by the operation processing means for referencing the assembled product configuration information, stored in the storage means, based on the individual-item ID of the assembled product passed from the electronic tag reading/writing means to acquire the individual-item ID of a part configuring the assembled product; and processing by the operation processing means or the electronic tag reading/writing means for removing read restriction from the electronic tag, attached to the part, by specifying the individual-item ID.

For use when an assembled product is disposed of, the present invention includes processing by the electronic tag reading/writing means for reading, from an electronic tag attached to the assembled product, an individual-item ID stored in the electronic tag and passing the individual-item ID to the operation processing means and for placing read restriction on the electronic tag that stores the individual-item ID; and processing by the operation processing means for deleting the configuration information, included as an assembled product, in the assembled product configuration information in which the individual-item ID is stored in the storage means.

The present invention includes processing by the operation processing means for detecting an invalid part replacement if the configuration information composed of a combination of the individual-item ID of the assembled product passed from the electronic tag reading/writing means and the individual-item ID of the old part or the part is not present when the assembled product configuration information stored in the storage means is referenced.

The present invention includes processing by the storage means for storing the product categories of individual-items on an individual-item ID basis, for storing a user master that is the table of correspondence between user IDs and operator types of the users, and for storing access authority information that is the correspondence table indicating, on a product category basis, whether a user operator type has processing authority to place read restriction on, or remove read restriction from, an electronic tag attached to an individual-item corresponding to the product category; processing by the operation processing means for acquiring a user ID and referencing the user master, stored in the storage means, to acquire the operator type corresponding to the user ID, for referencing the access authority information stored in the storage means and acquiring zero or more product categories to allow the user corresponding to the operator type to place read restriction on, or remove read restriction from, the electronic tag, and for allowing the user to place or remove read restriction only when the operation processing means confirms that the product category includes the product category of the individual-item on or from which read restriction is to be placed or removed.

The present invention includes processing by the storage means for storing password information for allowing the user to place read restriction on, or remove read restriction from, an electronic tag; processing by the operation processing means for acquiring password information from the storage means when read restriction is placed on, or removed from, the individual-item and for passing the password information to the electronic tag reading/writing means; and processing by the electronic tag reading/writing means for placing read restriction on, or removing read restriction from, the electronic tag using the password information.

The problems disclosed by this application and means to solve the problems will become apparent from the following description of the embodiments of the invention taken in conjunction with the accompanying drawings. It should be noted that the present invention includes not only the methods described above but also a device, a program, and a system including the device.

According to the present invention, the reading efficiency of an electronic tag is increased.

In the drawings
FIG. 1 is a diagram showing the hardware configuration of a product information management device in an embodiment of the present invention.
FIG. 2 is a diagram showing the configuration programs and tables stored in a storage device in the embodiment of the present invention.
FIG. 3 is a diagram showing an example of a work instruction information table in the embodiment of the present invention.
FIG. 4 is a diagram showing an example of a product information table in the embodiment of the present invention.
FIG. 5 is a diagram showing an example of an individual-item information table in the embodiment of the present invention.
FIG. 6 is a diagram showing an example of a user information table in the embodiment of the present invention.
FIG. 7 is a diagram showing an example of a processing authority information table in the embodiment of the present invention.
FIG. 8 is a processing flow showing processing when a product is manufactured in the embodiment of the present invention.
FIG. 9 is a processing flow showing processing when a part is replaced in the embodiment of the present invention.
FIG. 10 is a processing flow showing processing when a product is disposed of in the embodiment of the present invention.

An embodiment for carrying out the present invention will be described below with reference to the drawings.

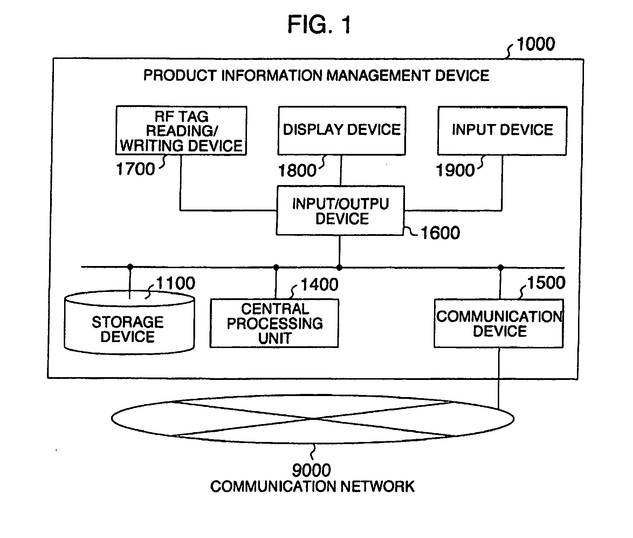

FIG. 1 is a diagram showing a hardware configuration of a product information management device to which one embodiment of the present invention is applied.

A product information management device 1000 shown in FIG. 1 is installed primarily in the development field or the maintenance/repairing field of a product manufacturer. The product information management device 1000 is composed of hardware and software for managing the product information. That is, the product information management device 1000 comprises a storage device 1100, a central processing unit 1400, a communication device 1500, an input/output device 1600, an RF tag reading/writing device 1700, a display device 1800, and an input device 1900. Those devices, each with a communication interface, are interconnected among them as shown in FIG. 1.

The following describes each of the devices.

The storage device 1100, composed of hard disk drives, includes program files for managing the product information and database in which the product information is stored. The programs and the database will be described later in detail.

The central processing unit 1400 at least comprises a memory, which operates as storage means used for performing operation processing, and a processing unit that performs the operation processing. The operation processing is executed when the processing unit, composed of the CPU (Central Processing Unit), executes a program that is read from the storage device 1100 into the memory. During the execution, the processing unit searches for or references the information, stored in the database in the storage device 1100, according to the program, performs the operation using the information, and stores the operation result in, or updates the contents of, the database. In addition, the central processing unit 1400 sends control instructions to the communication device 1500 and the input/output device 1600, receives the information acquired by the communication device 1500 and the input/output device 1600, and performs the operation using the received information.

The communication device 1500, a device for connection to an external network such as an intranet and the Internet, acts as the interface with a communication network 9000.

The input/output device 1600 is a device that integrally controls the RF tag reading/writing device 1700, display device 1800, and input device 1900 that are the interface with the user of the product information management device 1000 and other devices. The input/output device 1600 interprets the control instructions received from the central processing unit 1400, distributes processing among the devices, and processes the information, acquired by the devices, for transmission to the central processing unit 1400.

The RF tag reading/writing device 1700, composed of an RF tag reader/writer and an antenna, reads information from, and writes information in, the RF tag attached to a product or a part through electric waves.

The display device 1800, configured by a display, displays information for the user.

The input device 1900, configured by a keyboard and a mouse, accepts an input from the user.

Next, the following describes the programs stored in the storage device 1100 and the contents of the database.

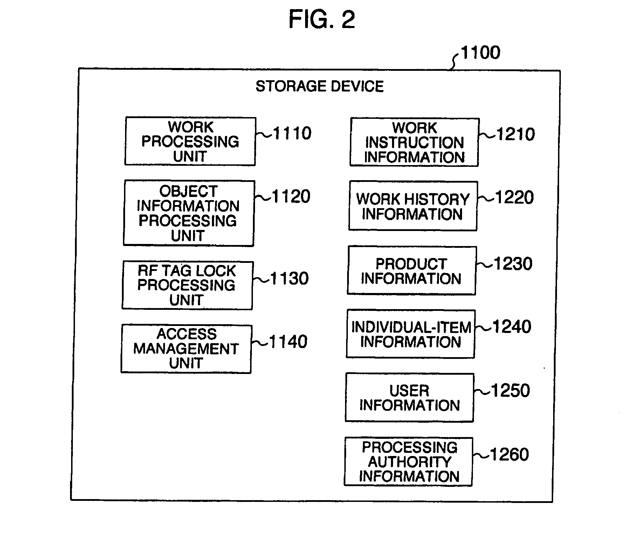

FIG. 2 is a diagram showing the programs and the tables in the database stored in the storage device 1100. As shown in the drawing, the storage device 1100 stores the following programs: a work processing unit 1110, an object information processing unit 1120, an RF tag lock processing unit 1130, and an access management unit 1140. In addition, the storage device 1100 stores the following tables: work instruction information 1210, work history information 1220, product information 1230, individual-item information 1240, user information 1250, and processing authority information 1260.

The work processing unit 1110 is a program that processes information on the assembly and maintenance work. This program registers or updates, and searches for or references, information in the work instruction information 1210 and the work history information 1220.

The object information processing unit 1120 is a program that processes information on objects such as a product or a part. This program registers or updates, and searches for or references, information in the product information 1230 and the individual-item information 1240.

The RF tag lock processing unit 1130 is a program that locks or unlocks an RF tag. The term "lock" refers to the state in which an RF tag is unreadable. The unreadable state refers, for example, to the state in which the KILL command is received and, as a result, the electric wave is not returned in response to the electric wave received via the antenna or to the state in which the Read Distance Limit command is received and, as a result, the electric wave is returned but the returned wave can be received only at close range.

The access management unit 1140 manages the users of the product information management device 1000 and manages the processing authority of the users. The access management unit 1140 registers or updates, and searches for or references, the information in the user information 1250 and the processing authority information 1260.

The programs have been above-described. The central processing unit 1400 executes the processing of the units described above according to the programs. The following describes the database. The work instruction information 1210 and the work history information 1220 are tables that store transaction information, while the other tables, that is, the product information 1230, individual-item information 1240, user information 1250, and processing authority information 1260 are tables that store the master information.

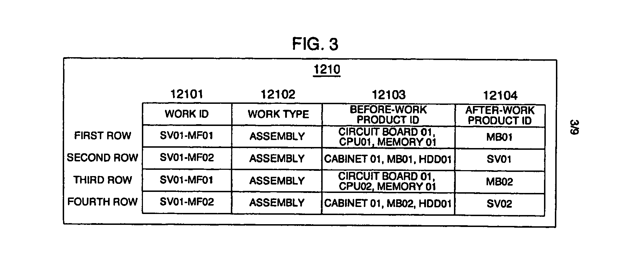

The work instruction information 1210 is a table that stores instruction information on the assembly work and the maintenance work. FIG. 3 is a diagram showing an example of the table configuration of the work instruction information 1210. One record indicates one work instruction and includes the following items: work ID 12101 uniquely identifying a work instruction, work type 12102 indicating a work type (assembly, maintenance, etc.), before-work product ID 12103 indicating the product IDs of the products used for the work and indicating the products before being used for the work indicated by the work instruction in the corresponding record, and after-work product ID 12104 indicating the product ID of the product obtained as a result of the work indicated by the work instruction in the corresponding record. Here, each "product ID" described above is the identifier indicating the model number of a product. One or more product IDs may be specified for the before-work product ID 12103 and the after-work product ID 12104. A record of the work instruction information 1210 is registered by the work process manager or the maintenance request acceptance clerk.

The work history information 1220 is a table that stores history information on the work performed for the work instructions registered in the work instruction information 1210. This table stores the work IDs of work instructions corresponding to work results as well as the work result information such as worker's names, work places, and work dates/times. A record of the work history information 1220 is registered when work is performed by the product information management device or when the work is completed.

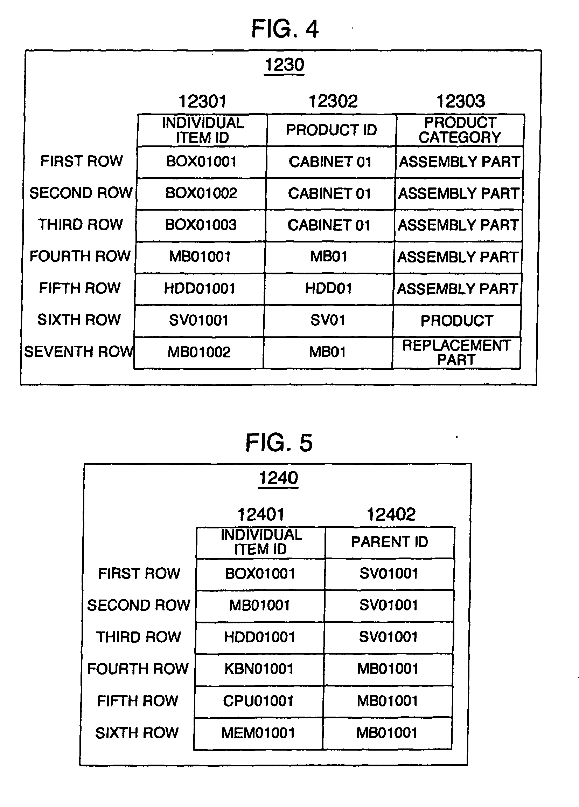

The product information 1230 is a table that stores information on the correspondence between individual-item IDs of products/parts and product IDs. An individual-item ID refers to the ID assigned to each product and each part, that is, the ID recorded in the RF tag attached to or included in a product or a part. A product ID is the same for the products/parts having the same model number because the product ID is an identifier identifying the model number as described above, but an individual-item ID is different among products/parts even if they have the same model number. FIG. 4 is a diagram showing an example of the configuration of this table. One record of this table, which indicates one individual-item, stores information on an individual-item ID 12301, a product ID 12302 corresponding to the individual-item, and a product category 12303 indicating the type of the product (maintenance part, consumable, etc.). A record of the product information 1230 is registered when an RF tag is attached or put on a product or a part, for example, when parts are received or a product is manufactured or assembled.

The individual-item information 1240 is a table that stores information on the parent-child relation between products and parts. The parent-child relation refers to the information on the configuration between a product and parts. For example, when the individual-item A and the individual-item B are assembled into the individual-item C, the individual-item C is the parent of the individual-item A and the individual-item B. FIG. 5 is a diagram showing an example of the configuration of this table. One record of this table indicates one relation between a child and a parent, and the record stores information such as an individual-item ID 12401 indicating the individual-item ID of the child and a parent ID 12402 indicating the individual-item ID of the parent. A record of the individual-item information 1240 is registered at the same time a record of the product information 1230 is registered.

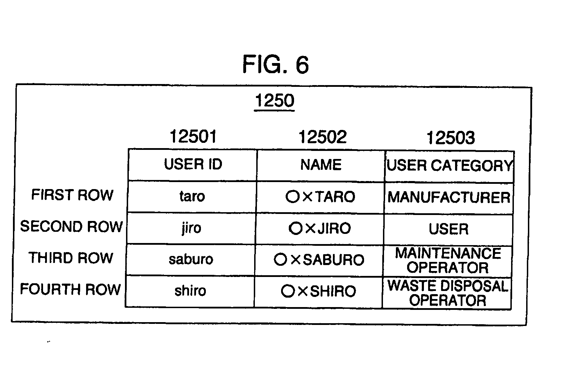

The user information 1250 is a table that stores information on the users who use the product information management device 1000. FIG. 6 is a diagram showing an example of the configuration of this table. One record of this table indicates one user, and the record stores information such as a user ID 12501, a name 12502 indicating the user name, and a user category (manufacturer, user, maintenance operator, etc.) 12503 of the user. A record of the user information 1250 is registered when a user of the product information management device 1000 is newly registered.

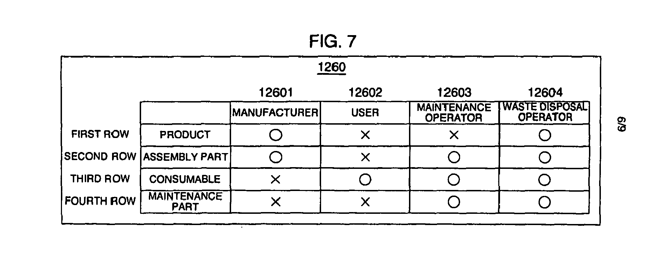

The processing authority information 1260 is a table that prescribes, for each product category, whether or not a user of the user category may lock/unlock the product corresponding to the product category. FIG. 7 is a diagram showing an example of the configuration of this table. One record of this table indicates one product category, and the record has columns, one for each user category (manufacturer 12601, user 12602, maintenance operator 12603, waste disposal operator 12604). That is, for each product category, this table stores information indicating whether or not a user corresponding to each user category may perform the lock/unlock processing. In the example shown in FIG. 7, the symbol "O" indicates a user category that has processing authority to perform the lock/unlock processing and the symbol "x" indicates a user category that has not authority to perform the lock/unlock processing. The access management unit 1140 references this table to check if the user, who is going to carry out work, has processing authority to lock/unlock the RF tag on a product/part for which the user is going to carry out the work.

The following describes the processing flow of the manufacturing information management method using examples of processing performed at product manufacturing time, part replacement time, and product disposal time.

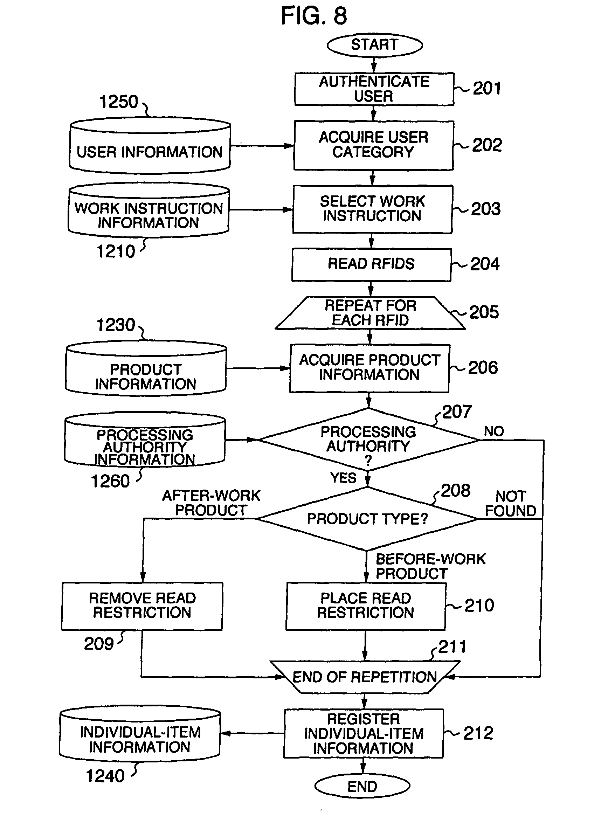

First, referring to the flowchart in FIG. 8, the following describes the processing flow of the manufacturing information management method at product manufacturing time, that is, the flow of processing in which, when parts are assembled into a product, the read restriction on the RFID of the product is removed to make it readable and the read restriction is placed on the RFIDs of the parts to make them unreadable.

First, in step 201, the user of the device is authenticated. The user ID is acquired from the information entered by the user or from the IC card. To ensure that the entered user ID is authentic, it is desirable to perform further authentication processing such as password authentication.

Next, in step 202, the user information 1250 is searched using the user ID as the search condition to acquire the user category.

Next, in step 203, one work instruction is selected from the work instruction information in the work instruction information 1210 to acquire the before-work product IDs and the after-work product ID of the work instruction.

Next, in step 204, the individual-item IDs are read from the RFIDs attached to the parts before the work, that is, before-assembly parts, and from the RFID attached to the after-assembly product. The individual-item IDs may also be read, not from the RFIDs, but from other ID readable media such as a bar code or a two-dimensional code.

Step 205 to step 211 are executed for each individual-item ID read in step 204. In those steps, an individual-item ID processed in step 205 to step 211 are called a to-be-processed individual-item ID.

In step 206, the product information on the to-be-processed individual-item ID, that is, the product ID and the product category, is acquired from the product information 1230.

In step 207, based on the processing authority information 1260, a check is made if the user category, acquired in step 202, has processing authority to place read restriction on, or remove read restriction from, the RFID of the product of the product category acquired in step 206. If the user has not processing authority to do so, the processing for the to-be-processed individual-item ID is terminated and step 205 to step 211 are performed for the next individual-item ID. If the user has processing authority to do so, control is passed to step 208.

The processing in step 207 for checking if the user category has processing authority to place or remove read restriction may be omitted. In that case, the processing in step 201 and step 202 and the product category acquisition processing in step 206 may be omitted.

In step 208, based on the product ID acquired in step 206 and the work instruction acquired in step 203, a check is made if read restriction is to be placed on or removed from the to-be-processed individual-item ID. To do so, a check is made if the product ID acquired in step 206 is a before-work product ID or an after-work product ID. If the product ID is a before-work product ID, control is passed to step 210 to place read restriction; if the product ID is an after-work product ID, control is passed to step 209 to remove read restriction.

In step 209, read restriction is removed from the RFID of the to-be-processed individual-item ID via the RF tag reading/writing device 1700. If read restriction is not placed on the RFID before the assembly, no processing is performed in step 209.

In step 210, read restriction is placed on the RFID of the to-be-processed individual-item ID via the RF tag reading/writing device 1700.

In step 212, the relation between an installed part and the product is registered in the individual-item information 1240. More specifically, the individual-item ID judged as an after-work product in step 208 is determined as the parent ID and the individual-item ID judged as a before-work product in step 208 is determined as the individual-item ID, and the combination of the two individual-item IDs is saved in the individual-item information 1240.

A password is managed separately if required for placing and removing read restriction in step 209 and step 210, and this password is passed to the RF tag reading/writing device 1700 when read restriction is placed and removed. It is possible to manage one password and use it for all RFIDs or to add the password management column to each individual-item in the product information 1230 shown in FIG. 4 for managing passwords on an individual-item basis.

The following describes, more in detail, the processing of the flowchart in FIG. 8 using an example of the data stored in the tables shown in FIG. 3 - FIG. 7.

Assume that the user ID "taro" is acquired in step 201.

In step 202, the user category "manufacturer" in the first row, which corresponds to the user ID "taro", is acquired from the user information 1250 shown in FIG. 6.

In step 203, the work instruction in the second row is selected from the work instruction information 1210 shown in FIG. 3, and the before-work product IDs "cabinet 01", "MB01", and "HDD01" and the after-work product ID "SV01" are acquired.

In step 204, the RFIDs attached to the parts, which are assembled in the work, and the RFID attached to the assembled product are read, and the individual-item IDs "BOX01001", "MB01001", "HDD01001", and "SV01001" are acquired.

After that, step 205 to step 211 are repeated for each ID acquired in step 204.

First, the following describes the processing performed for "BOX01001" in step 205 to step 211.

In step 206, the product information in the first row, which corresponds to the individual-item ID "BOX01001", is acquired from the product information 1230 shown in FIG. 4, and the product ID "cabinet 01" and the product category "assembly part" are acquired.

In step 207, the processing authority information 1260, shown in FIG. 7, is checked to see if the user category "manufacturer", acquired in step 202, has processing authority for the product category "assembly part" acquired in step 206. Because "O" is stored at the intersection between the column of the manufacturer 12601 and the second row corresponding to "assembly part", the manufacturer is determined to have processing authority and control is passed to step 208. If "x" is stored, the processing is terminated without placing restriction on or removing restriction from the individual-item ID "BOX01001" and control is passed to the processing of the next individual-item ID.

In step 208, because the same product ID as the product ID "cabinet 01" acquired in step 206 belongs to the before-work product IDs acquired in step 203, control is passed to step 210.

In step 210, read restriction is placed on the RFID of the individual-item ID "BOX01001".

Individual-item IDs "MB01001" and "HDD01001" are processed in the same manner as "BOX01001". That is, the product IDs acquired in step 206 correspond to before-work product IDs, the product categories are "assembly part" and, in step 207, the user category is determined to have processing authority. Therefore, in step 210, reading restriction is placed on the RFIDs of the individual-item IDs "MB01001" and "HDD01001".

Next, the following describes the processing performed for "SV01001" in step 205 to step 211.

In step 206, the product information in the sixth row corresponding to the individual-item ID "SV01001" is acquired from the product information 1230 shown in FIG. 4, and the product ID "SV01" and the product category "product" are acquired.

In step 207, the processing authority information 1260, shown in FIG. 7, is checked to see if the user category "manufacturer", acquired in step 202, has processing authority for the product category "product" acquired in step 206. Because "O" is stored at the intersection between the column of the manufacturer 12601 and the first row corresponding to "product", the manufacturer is determined to have processing authority and control is passed to step 208. In step 208, because the same product ID as the product ID "SV01" acquired in step 206 belongs to the after-work product ID acquired in step 203 as shown in FIG. 3, control is passed to step 209.

In step 209, read restriction is removed from the RFID of the individual-item ID "SV01001".

In step 212, the individual-item information is registered as shown in the first row to the third row of the individual-item information 1240 shown in FIG. 5 wherein the individual-item ID "SV01001" judged as an after-work product is the parent ID and the individual-item IDs "BOX01001", "MB01001", and "HDD01001" judged as before-work products are individual-item IDs.

As described above, of the individual-item IDs "BOX01001", "MB01001", "HDD01001", and "SV01001" that were read, read restriction is placed on "BOX01001", "MB01001", and "HDD01001" that correspond to parts, but is removed from "SV01001" that corresponds to the product. When the user reads the RFIDs after this processing, the RFID of the product can be read but the RFIDs of the parts cannot.

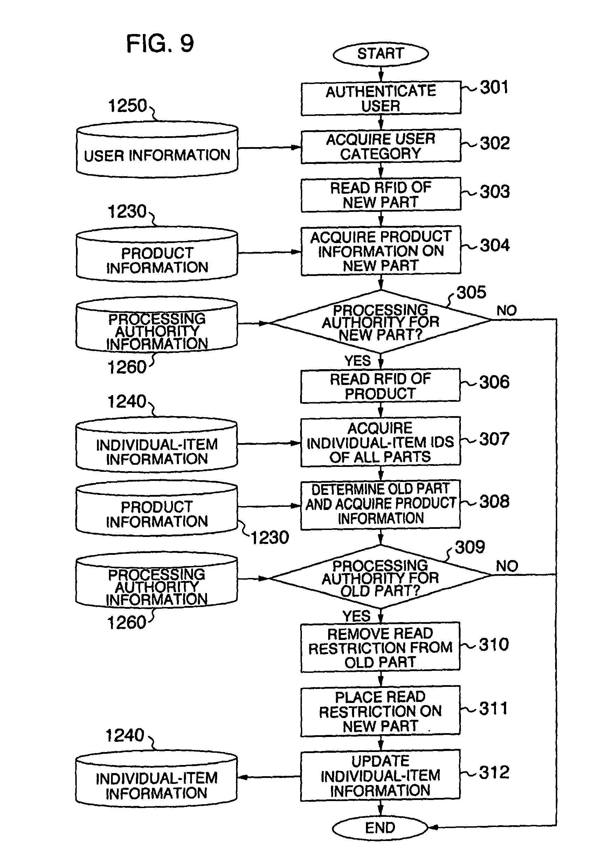

Next, referring to the flowchart in FIG. 9, the following describes the processing flow of the manufacturing information management method for use when a part is replaced. That is, the following describes the processing for removing read restriction from the RFID of an old part, which is removed from a product at part replacement time, to make it readable and for placing read restriction on the RFID of a new part, which is installed in the product, to make it unreadable.

First, in step 301, the user ID is acquired. To ensure that the acquired user ID is authentic, it is desirable to perform authentication processing such as password authentication.

Next, in step 302, the user information 1250 is searched using the user ID as the search condition to acquire the user category.

In step 303, the RFID of a new part is read to acquire the individual-item ID of the new part.

In step 304, the individual-item ID of the new part acquired in step 303 is used to acquire the product ID and the product category of the new product from the product information 1230.

In step 305, a check is made if the user category has processing authority for the new part. More specifically, based on the processing authority information 1260, a check is made if the user of the user category acquired in step 302 has processing authority to place read restriction on, or remove read restriction from, the RFID of the product of the product category acquired in step 304. If the user has not processing authority, the processing is terminated.

In step 306, the RFID of the product whose part is to be replaced is read, and the individual-item ID of the product is acquired.

In step 307, the individual-item IDs of the parts installed in the product, whose part is to be replaced, are acquired from the individual-item information 1240. In this case, all individual-item information may also be acquired. More specifically, one or more individual-item IDs whose parent ID is the individual-item ID of the product, which is acquired in step 306 and whose part is to be replaced, are acquired (first level individual-item ID), one or more individual-item IDs whose parent ID is the first level individual-item ID are acquired(second level individual-item ID), one or more individual-item IDs whose parent ID is the second level individual-item ID are acquired(third level individual-item ID), and so on. This recursive processing is repeated until any more individual-item ID cannot be acquired and, in this way, the individual-item IDs whose ancestor ID is the individual-item ID of the product are eventually acquired. In this case, all individual-item IDs may also be acquired.

In step 308, the individual-item ID of the old part, which was acquired in step 307 for replacement, is identified. More specifically, assuming that the old part and its corresponding new part have the same product ID, the product ID of each part is acquired from the product information 1230 using the individual-item ID of the part that is installed in the product and that is one of parts to be replaced acquired in step 307. If the acquired product ID is the same as the product ID of the new part acquired in step 304, the part is determined to be the old part to be replaced.

In step 309, a check is made if the user category has processing authority for the old part. More specifically, based on the processing authority information 1260, a check is made if the user of the user category acquired in step 302 has processing authority to place read restriction on, or remove read restriction from, the RFID of the product of the product category acquired in step 308. If the user has not processing authority, the processing is terminated.

In step 310, read restriction is removed from the RFID of the old part. More specifically, read restriction is removed from the RFID of the individual-item ID, acquired in step 308, via the RF tag reading/writing device 1700.

In step 311, place read restriction on the RFID of the new part. More specifically, read restriction is placed on the RFID of the individual-item ID, acquired in step 303, via the RF tag reading/writing device 1700.

In step 312, the individual-item information 1240 is updated from the information before the part replacement to the information after the part replacement. More specifically, the relation between the individual-item ID of the old part and the individual-item ID (parent ID) of the product is deleted and, instead, the relation between the individual-item ID of the new part and the individual-item ID (parent ID) of the product is added.

The processing for checking if the user category has processing authority to place and remove read restriction in step 305 and step 309 may be omitted. In that case, the processing in step 301 and step 302 and the product category acquisition processing in step 304 and step 308 may also be omitted.

A password is managed separately if required for placing and removing read restriction in step 310 and step 311, and this password is passed to the RF tag reading/writing device 1700 when read restriction is placed and removed. It is possible to manage one password and use it for all RFIDs or to add the password management column to each individual-item in the product information 1230 shown in FIG. 4 for managing passwords on an individual-item basis.

The following describes, more in detail, the processing of the flowchart in FIG. 9 using an example of the data stored in the tables in FIG. 3 - FIG. 7.

Assuming that the user ID "saburo" is acquired in step 301.

In step 302, the user category "maintenance operator" in the first row, which corresponds to the user ID "saburo", is acquired from the user information 1250 shown in FIG. 6.

In step 303, the RFID of the new part to be used for replacement is read and the individual-item ID "MB01002" is acquired.

In step 304, the product information in the seventh row corresponding to the individual-item ID "MB01002" is acquired from the product information 1230 shown in FIG. 4, and the product ID "MB01" and the product category "replacement part" are acquired.

In step 305, the processing authority information 1260, shown in FIG. 7, is checked to see if the user category "maintenance operator", acquired in step 302, has processing authority for the product category "replacement part" of the new part acquired in step 304. Because "O" is stored at the intersection between the column of the maintenance operator 12603 and the fourth row corresponding to "maintenance part", the maintenance operator is determined to have processing authority and control is passed to step 306. In this case, if "x" is stored, the processing is terminated.

In step 306, the RFID of the product whose part is to be replaced is read, and the individual-item ID "SV01001" is acquired.

In step 307, the following individual-item IDs are acquired from the individual-item information 1240, shown in FIG. 5, as the individual-item IDs of the parts installed in the product whose part is to be replaced; that is, the individual-item IDs "BOX01001", "MB01001", and "HDD01001" in the first row to the third row whose parent ID is "SV01001" acquired in step 306 as the individual-item ID of the product whose part is to be replaced and the individual-item IDs "KBN01001", "CPU01001", and "MEM01001" in the fourth row to the sixth row whose parent ID is "MB01001" acquired as described above.

In step 308, the product information on the individual-item IDs "BOX01001", "MB01001", "HDD01001", "KBN01001", "CPU01001", and "MEM01001", which were acquired in step 307, is acquired from the product information 1230 shown in FIG. 4, and the product information corresponding to the product ID "MB01" of the new product acquired in step 304, that is, the individual-item ID "MB01001", product ID "MB01", and product category "assembly part" in the fourth row of the product information 1230 in FIG. 4, is acquired as the product information on the old part to be replaced.

In step 309, the processing authority information 1260, shown in FIG. 7, is checked to see if the user category "maintenance operator", acquired in step 302, has processing authority for the product category "assembly part" of the old part acquired in step 308. Because "O" is stored at the intersection between the column of the maintenance operator 12603 and the second row corresponding to "assembly part", the maintenance operator is determined to have processing authority and control is passed to step 310. In this case, if "x" is stored, the processing is terminated.

In step 310, read restriction is removed from the RFID of the individual-item ID "MB01001" of the old part acquired in step 308.

In step 311, read restriction is placed on the RFID of the individual-item ID "MB01002" of the new part acquired in step 303.

In step 312, the second row of the individual-item information 1240 in FIG. 5, which corresponds to the relation between the individual-item ID "SV01001" of the product, acquired in step 306 as the product whose part is to be replaced, and the individual-item ID "MB01001" of the old part, acquired in step 308, is deleted and, instead, the relation between the individual-item ID "MB01002" of the new part and the individual-item ID (parent ID) "SV01001" of the product whose part is to be replaced is added.

When a part is replaced, the above processing is performed to remove read restriction from the RFID of the old part (individual-item ID "MB01001"), which is removed from the product at replacement time, to make the RFID readable and to place read restriction on the RFID of the new part (individual-item ID "MB01002"), which is installed in the product, to make the RFID unreadable.

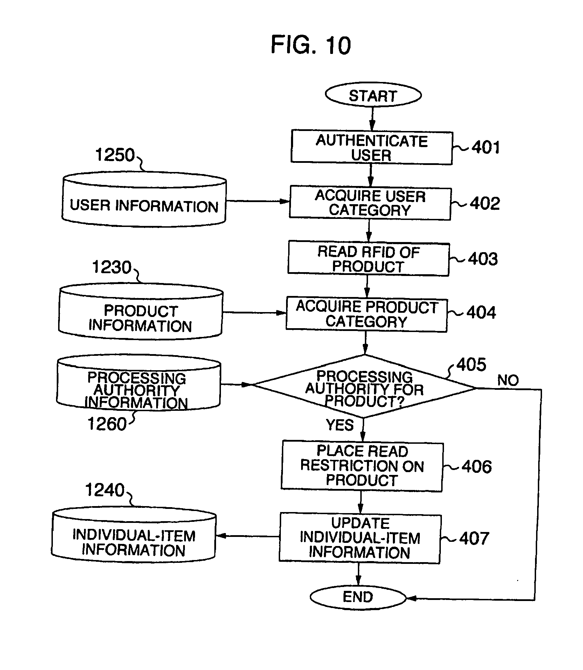

Next, referring to the flowchart in FIG. 10, the following describes the processing flow of the manufacturing information management method at product disposal time, that is, the flow of processing in which, when a product is disposed of, read restriction is placed on the RFID of the product to make it unreadable.

First, in step 401, the user ID is acquired. To ensure that the entered user ID is authentic, it is desirable to perform further authentication processing such as password authentication.

Next, in step 402, the user information 1250 is searched using the user ID as the search condition to acquire the user category.

In step 403, the RFID of the product to be disposed of is read to acquire the individual-item ID of the product.

In step 404, the product category of the product to be disposed of is acquired from the product information 1230 using the individual-item ID of the product acquired in step 403.

In step 405, a check is made if the user category has processing authority for the product to be disposed of. More specifically, based on the processing authority information 1260, a check is made to see if the user of the user category, acquired in step 402, has processing authority to place read restriction on, or remove read restriction from, the RFID of the product whose product category was acquired in step 404. If the user has not processing authority, the processing is terminated.

The processing in step 405 for checking if the user category has processing authority to place or remove read restriction may be omitted. In that case, the processing in step 401 and step 402 and the product category acquisition processing in step 404 may also be omitted.

In step 406, read restriction is placed on the RFID of the product to be disposed of. More specifically, read restriction is placed on the RFID of the individual-item ID, acquired in step 403, via the RF tag reading/writing device 1700.

In step 407, the individual-item information on the products that have been disposed of is deleted from the individual-item information 1240. More specifically, the individual-item IDs, whose ancestor ID is the individual-item ID of the product that has been disposed of, are acquired recursively in the same way as described in step 307 and the acquired individual-item IDs are deleted.

A password is managed separately if required for placing and removing read restriction in step 406, and this password is passed to the RF tag reading/writing device 1700 when read restriction is placed and removed. It is possible to manage one password and use it for all RFIDs or to add the password management column to each individual-item in the product information 1230 shown in FIG. 4 for managing passwords on an individual-item basis.

The following describes, more in detail, the processing of the flowchart in FIG. 10 using an example of the data stored in the tables in FIG. 3 - FIG. 7.

Assume that the user ID "shiro" is acquired in step 401.

In step 402, the user category "waste disposal operator" in the first row, which corresponds to the user ID "shiro", is acquired from the user information 1250 shown in FIG. 6.

In step 403, the RFID of the product to be disposed of is read, and the individual-item ID "SV01001" is acquired.

In step 404, the product information in the seventh row, which corresponds to the individual-item ID "SV01001", is acquired from the product information 1230 shown in FIG. 4, and the product category "product" is acquired.

In step 405, the processing authority information 1260, shown in FIG. 7, is checked to see if the user category "waste disposal operator", acquired in step 402, has processing authority for the product category "product" of the product to be disposed of that was acquired in step 404. Because "O" is stored at the intersection between the column of the waste disposal operator 12604 and the first row corresponding to "product", the waste disposal operator is determined to have processing authority and control is passed to step 406. If "x" is stored, the processing is terminated.

In step 406, read restriction is placed on the RFID of the individual-item ID "SV01001" of the product to be disposed of that was acquired in step 403.

In step 407, the following individual-item IDs are deleted from the individual-item information 1240 shown in FIG. 5; that is, the individual-item IDs "BOX01001", "MB01001", and "HDD01001" in the first row to the third row whose parent ID is "SV01001" acquired in step 403 as the individual-item ID of the product to be disposed of and the individual-item IDs "KBN01001", "CPU01001", and "MEM01001" in the fourth row to the sixth row whose parent ID is "MB01001".

The above processing is performed at product disposal time to place read restriction on the RFID (individual-item ID "SV01001") of the product to make the RFID unreadable.

It should be further understood by those skilled in the art that although the foregoing description has been made on embodiments of the invention, the invention is not limited thereto and various changes and modifications may be made without departing from the spirit of the invention and the scope of the appended claims; as interpreted by the description and drawings.

## Claims

1. An individual-item information management method that uses an information processing device (1000) for controlling reading of an electronic tag in which individual-item information (1230, 1240) for managing an individual item is stored, said method comprising the steps, by said information processing device (1000), of:
detecting a status of the individual-item (204, 206, 303, 304, 306, 307, 403, 404);
determining if the detected status of the individual-item is compatible with a predetermined status change (207, 305, 309, 405); and
if the status is found to be compatible as a result of the determination, changing read control information (212, 312, 407) stored in a storage device (1100), said read control information being used for controlling reading of an electronic tag corresponding to the individual-item.

2. The individual-item information management method according to claim 1 wherein
said information processing device (1000) is connected to a manufacturing instruction information storage device in which manufacturing instruction information (1210) for assembling the individual-items into a product is stored, and
determines if the detected status of the individual-item is compatible with the status change by comparing the detected status of the individual-item with the manufacturing instruction information.

3. The individual-item information management method according to claim 2,
said method further comprising the step, by said information processing device (1000), of converting an individual-item ID, included in the individual-item information, to a product code used in the manufacturing instruction information (1210) wherein
if a status corresponding to the converted product code is the detected status, said information processing device (1000) determines that the status is compatible with the status change.

4. The individual-item information management method according to claim 2,
said method further comprising the step, by said information processing device (1000), of converting an individual-item ID, included in the individual-item information, to a product code used in the manufacturing instruction information (1210) wherein
if the converted product code is stored in the manufacturing instruction information storage device, said information processing device (1000) determines that the status is compatible with the status change.

5. The individual-item information management method according to claim 1 wherein
said information processing device (1000) changes the read control information in such a way that reading of the electronic tag is inhibited or the inhibition is removed.

6. The individual-item information management method according to claim 5 wherein
said information processing device (1000) makes information in the electronic tag unreadable by changing the read control information to read-restricting information to implement the inhibition.

7. An individual-item information management device (1000) for controlling reading of an electronic tag in which individual-item information (1230, 1240) for managing an individual item is stored, said device comprising:
means for detecting a status of the individual-item;
means for determining if the detected status of the individual-item is compatible with a predetermined status change; and
means for changing read control information stored in a storage device (1100)if the status is found to be compatible as a result of the determination, said read control information being used for controlling reading of an electronic tag corresponding to the individual-item.

8. The individual-item information management device (1000) according to claim 7, further comprising:
means for connecting to a manufacturing instruction information storage device in which manufacturing instruction information (1210) for assembling the individual-items into a product is stored wherein
said means for determining determines if the detected status of the individual-item is compatible with the status change by comparing the detected status of the individual-item with the manufacturing instruction information.

9. The individual-item information management device (1000) according to claim 8, further comprising:
means for converting an individual-item ID, included in the individual-item information, to a product code used in the manufacturing instruction information (1210) wherein
if a status corresponding to the converted product code is the detected status, said means for determining determines that the status is compatible with the status change.

10. The individual-item information management device (1000) according to claim 8, further comprising:
means for converting an individual-item ID, included in the individual-item information, to a product code used in the manufacturing instruction information (1210) wherein
if the converted product code is stored in the manufacturing instruction information storage device, said means for determining determines that the status is compatible with the status change.

11. The individual-item information management device (1000) according to claim 7 wherein
said means for changing changes the read control information in such a way that reading of the electronic tag is inhibited or the inhibition is removed.

12. The individual-item information management device (1000) according to claim 11 wherein
said means for changing makes information in the electronic tag unreadable by changing the read control information to read-restricting information to implement the inhibition.
